# EUROPÄISCHE PATENTSCHRIFT

(11) **EP 3 475 589 B1**
(45) Veröffentlichungstag und Bekanntmachung des Hinweises auf die Patenterteilung: **27.01.2021**
(21) Anmeldenummer: 17726207.8
(22) Anmeldetag: 10.05.2017
(51) Int. Cl.: F16C 11/04, F16C 17/10, F16C 43/02, F16C 33/08

(54) **GELENKANORDNUNG, VORGEFERTIGTE BAUGRUPPE SOWIE VERFAHREN ZUR HERSTELLUNG EINER VORGEFERTIGTEN BAUGRUPPE EINER GELENKANORDNUNG**
JOINT ARRANGEMENT, PREFABRICATED ASSEMBLY, AND METHOD FOR PRODUCING A PREFABRICATED ASSEMBLY OF A JOINT ARRANGEMENT
SYSTÈME D'ARTICULATION, MODULE PRÉFABRIQUÉ ET PROCÉDÉ DE FABRICATION D'UN MODULE PRÉFABRIQUÉ D'UN SYSTÈME D'ARTICULATION

(30) Priorität: 27.06.2016 DE 102016111708
(43) Veröffentlichungstag der Anmeldung: 01.05.2019
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB
(86) Internationale Anmeldenummer: PCT/EP2017/061124
(87) Internationale Veröffentlichungsnummer: WO 2018/001613

(56) Entgegenhaltungen:
- EP-A1- 0 627 346
- EP-A1- 0 679 559
- WO-A1-2015/009166
- ES-A1- 2 133 056
- GB-A- 2 094 880
- US-A1- 2004 013 465

## Beschreibung

Die Erfindung betrifft eine Gelenkanordnung, eine vorgefertigte Baugruppe sowie ein Verfahren zur Herstellung einer derartigen vorgefertigten Baugruppe einer Gelenkanordnung gemäß dem Oberbegriff des Patentanspruches 1, 12 und 13.

Gelenkanordnungen zur Herstellung einer Gelenkverbindung zwischen zwei Bauteilen oder Werkstücken werden in den unterschiedlichsten Bereichen der Technik benötigt, insbesondere auch im Automobilbau, und zwar beispielsweise bei Gestängen zwischen der Fahrzeugkarosserie und einem beweglichen Karosserieelement. Aber auch in anderen Bereichen der Technik werden derartige Gelenke benötigt, die in der Regel aus einer in einem Bauteil verdrehungssicher gehaltenen Gelenkbuchse und aus einem Gelenkbolzen bestehen, der mit seinem Buchsenabschnitt drehbar bzw. schwenkbar in der Gelenkbuchse gelagert ist, mit einem Bolzenkopf gegen axiales Verschieben am ersten Bauteil oder an einem flanschförmigen Abschnitt der Lager- oder Gelenkbuchse anliegend gesichert ist und in dem zweiten Bauteil in geeigneter Weise, beispielsweise durch Vernieten befestigt ist.

Aus der EP 2 204 257 A2 sind bereits unterschiedliche Ausführungsvarianten einer derartigen Gelenkanordnung bekannt. Diese umfassen eine in eine Öffnung im ersten Bauteil eingesetzte Gleitlager- oder Gelenkbuchse mit einem hülsenartigen Buchsenabschnitt, an den sich im Verbindungszustand an einem freien Ende ein flanschförmiger Buchsenabschnitt und am gegenüberliegenden freien Ende ein umgelegter Buchsenrand anschließen. Der flanschförmige Buchsenabschnitt und der umgelegte Buchsenrand liegen hierbei am Randbereich der Öffnung an und sichern somit die im ersten Bauteil eingesetzte Gleitlager- oder Gelenkbuchse gegen ein Verdrehen. Ferner ist ein Gelenkbolzen umfassend einen Bolzenkopf gefolgt von einem ersten und zweiten Bolzenabschnitt, wobei der erste Bolzenabschnitt einen im Vergleich zum zweiten Bolzenabschnitt größeren Durchmesser aufweist. Der Gelenkbolzen ist mit seinem ersten Bolzenabschnitt im hülsenartigen Buchsenabschnitt der Gleitlager- oder Gelenkbuchse aufgenommen, und zwar derart, dass der Bolzenkopf gegen den flanschförmigen Buchsenabschnitt anliegt. Der Gelenkbolzen ist mit seinem zweiten Bolzenabschnitt durch eine Öffnung im zweiten Bauteil geführt und dort beispielsweise mittels Nieten verdrehsicher verankert. Aufgrund der Verwendung von metallischen Gleitlager- oder Gelenkbuchsen ist bei der beschriebenen Gelenkanordnung ein Umlegen des freien Buchsenrandes nach dem Einsetzen der Gleitlager- oder Gelenkbuchse in die Öffnung des ersten Bauteil erforderlich, welches dann die Lager- und Gleitfläche für das zweite Bauteil bildet. Die Güte der Lager- und Gleitfläche ist damit nachteilig vom Umlegen des freien Buchsenrandes abhängig.

Ferner sind aus Kunststoff hergestellte Gleitlager- bzw. Gelenkbuchsen bekannt, die nach Einbringen in Öffnung des ersten Bauteils nicht formstabil umgeformt werden können, um hierdurch eine Verliersicherung der Gleitlager- bzw. Gelenkbuchse am ersten Bauteil zu ermöglichen.

Beispielsweise ist ferner aus der US 2004/013465 A1 eine Gelenkanordnung bekannt, bei der eine in einer ersten Öffnung eines ersten Bauteils aufgenommene Gelenkbuchse und ein durch die Gelenkbuchse hindurchgeführter Gelenkbolzen vorgesehen sind, wobei der Gelenkbolzen mittels einer Nietverbindung an einem zweiten Bauteil befestigbar ist. Zwischen dem Bolzenkopf und der Oberseite des ersten Bauteils ist ein Anlaufscheibenelement aufgenommen. Die Gelenkbuchse ist dabei als Bundlager ausgebildet und weist einen an der Unterseite des ersten Bauteils anliegenden ringförmige Bundabschnitt auf.

Ausgehend davon ist es Aufgabe der Erfindung, eine Gelenkanordnung mit guten Lager-und Gleiteigenschaften, eine entsprechende vorgefertigte Baugruppe einer derartigen Gelenkanordnung sowie ein einfaches und insbesondere rationelles Verfahren zur Herstellung einer vorgefertigte Baugruppe einer Gelenkanordnung anzugeben. Die Aufgabe wird ausgehend von einer Gelenkanordnung gemäß den Merkmalen des Oberbegriffes des Patentanspruches 1 durch dessen kennzeichnende Merkmale gelöst. Ferner ist zur Lösung dieser Aufgabe eine vorgefertigte Baugruppe gemäß Patentanspruch 12 und ein Verfahren zur Herstellung einer vorgefertigte Baugruppe einer Gelenkanordnung gemäß Patentanspruch 13 entsprechend ausgebildet.

Ein wesentlicher Aspekt der erfindungsgemäßen Gelenkanordnung ist darin zu sehen, dass zwischen dem Bolzenkopf und der Oberseite des ersten Bauteils ein Anlaufscheibenelement aufgenommen ist, dass die Gelenkbuchse als Bundlager mit einem in der ersten Öffnung aufgenommenen Buchsenabschnitt und einen daran anschließenden ringförmigen Bundabschnitt ausgebildet ist, wobei der ringförmige Bundabschnitt an der Unterseite des ersten Bauteils anliegt. Das Anlaufscheibenelement und/oder die als Bundlager ausgebildete Gelenkbuchse sind dabei am Gelenkbolzen verliergesichert gehalten. Besonders vorteilhaft ist die beschriebene Gelenkanordnung schnell und kostengünstig herstellbar, insbesondere unter Verwendung von aus Kunststoff hergestellten Gelenkbauteilen. Insbesondere durch die Vormontage des einen Teil der Gelenkanordnung bildenden Anlaufscheibenelementes am Gelenkbolzen ergibt sich ein besonders einfaches Setzens des derart vorbereiteten Gelenkbolzens in der als Bundlager ausgebildeten und bereits in der Öffnung im ersten Bauteil aufgenommenen Gelenkbuchse. Vorzugsweise liegt hierbei das Anlaufscheibenelement unmittelbar am Bolzenkopf und an der Oberseite des ersten Bauteils an. Das Anlaufscheibenelement ist hierzu vorzugsweise aus Kunststoff hergestellt und zur axialen Lagerung des Gelenkbolzens gegenüber dem ersten Bauteil ausgebildet. Die Gelenkbuchse ist aus einem dünnwandigen Material, vorzugsweise ebenfalls aus Kunststoff oder Metall, beispielsweise Stahl oder Bronze hergestellt. Das Bundlager ist hierbei als Gleitbundlager ausgebildet.

Die im Querschnitt näherungsweise L-förmig ausgebildete Gelenkbuchse ist vorzugsweise derart ausgebildet, dass sich deren Buchsenabschnitt am ersten Bolzenabschnitt und deren ringförmiger Bundabschnitt am zweiten Bauteil abstützt. Hierzu weist der Gelenkbolzen zumindest einen ersten bis dritten Bolzenabschnitt auf, die sich an den Bolzenkopf entlang der Bolzenlängsachse hintereinander anschließen und unterschiedliche Durchmesser aufweisen, so dass sich ein Gelenkbolzen mit einem mehrfach gestuften Randverlauf ergibt.

In einer bevorzugten Ausführungsvariante weist der Gelenkbolzen zumindest einen ersten Bolzenabschnitt mit einem ersten Durchmesser und einer ersten Breite, einen zweiten Bolzenabschnitt mit einem zweiten Durchmesser und einer zweiten Breite und einen dritten Bolzenabschnitt mit einem dritten Durchmesser und einer dritten Breite auf, wobei der erste bis dritte Durchmesser und/oder die erste bis dritte Breite jeweils unterschiedlich gewählt sind. Vorzugsweise ist der erste Durchmesser größer als der zweite Durchmesser und der zweite Durchmesser größer als der dritte Durchmesser.

In einer weiteren Ausführungsvariante ist der Buchsenabschnitt der als Bundlager ausgebildeten Gelenkbuchse verdrehsicher in der ersten Öffnung des Bauteils aufgenommen und weist hierzu beispielsweise an seiner Außenseite eine Riffelung auf. Vorteilhaft sind das Anlaufscheibenelement vorzugsweise am ersten Bolzenabschnitt und/oder die Gelenkbuchse vorzugsweise am zweiten Bolzenabschnitt verliergesichert.

Das vom ersten Bolzenabschnitt aufgenommene Anlaufscheibenelement wird beispielsweise durch eine geringfügige plastische Verformung des Materials des Gelenkbolzens im Bereich der Stufe zwischen dem ersten und zweiten Bolzenabschnitts am Gelenkbolzen gesichert.

Der Gelenkbolzen weist ferner im gestuften Bereich zwischen dem zweiten und dritten Bolzenabschnitt einen sich um die Bolzenlängsachse erstreckenden ringförmigen

Vorsprung auf, der eine ringförmige Nut umschließt. Die im Bereich des zweiten Bolzenabschnitts aufgenommene Gelenkbuchse ist durch plastisches Verformen des ringförmigen Vorsprunges des zweiten Bolzenabschnitts nach außen, d.h. in radialer Richtung zur Bolzenlängsachse am zweiten Bolzenabschnitt verliergesichert.

Weiterhin vorteilhaft weist das Anlaufscheibenelement eine zentrale Öffnung auf, die zur Aufnahme des ersten Bolzenabschnittes ausgebildet ist.

Weiterhin vorteilhaft ist der aus der Gelenkbuchse hervorstehende dritte Bolzenabschnitt am zweiten Bauteil mittels einer Nietverbindung befestigt, und zwar vorzugsweise derart, dass der ringförmige Bundabschnitt zwischen der Unterseite des ersten Bauteils und der Oberseite des zweiten Bauteils aufgenommen ist.

Ebenfalls ist Gegenstand der Erfindung eine vorgefertigte Baugruppe zur Herstellung einer Gelenkanordnung umfassend zumindest ein erstes, eine Ober- und Unterseite aufweisenden Bauteil, vorzugsweise blechförmiges Metallbauteil, eine in einer ersten Öffnung des ersten Bauteils aufgenommene Gelenkbuchse und einen durch die Gelenkbuchse hindurchgeführten Gelenkbolzen mit einem Bolzenkopf. Vorteilhaft ist zwischen dem Bolzenkopf und der Oberseite des ersten Bauteils ein Anlaufscheibenelement aufgenommen und die Gelenkbuchse als Bundlager mit einem in der ersten Öffnung aufgenommenen Buchsenabschnitt und einen daran anschließenden ringförmigen Bundabschnitt ausgebildet, wobei der ringförmige Bundabschnitt an der Unterseite des ersten Bauteils anliegt.

Ferner ist Gegenstand der Erfindung ein Verfahren zur Herstellen einer vorgefertigten Baugruppe einer Gelenkanordnung zwischen zumindest einem ersten und zweiten, jeweils eine Ober- und Unterseite aufweisenden Bauteil, vorzugsweise blechförmigen Metallbauteil, bei dem die Gelenkanordnung zumindest einen Gelenkbolzen mit einem Bolzenkopf und mehreren entlang einer Bolzenlängsachse hintereinander angeordneten Bolzenabschnitten, eine Gelenkbuchse und ein Anlaufscheibenelement aufweist, wobei die Gelenkbuchse als Bundlager mit einem Buchsenabschnitt und einen daran anschließenden ringförmigen Bundabschnitt ausgebildet ist. Besonders vorteilhaft wird auf einen sich an den Bolzenkopf unmittelbar anschließenden ersten Bolzenabschnitt das Anlaufscheibenelement aufschoben und die Gelenkbuchse mit dem Buchsenabschnitt in eine erste Öffnung des ersten Bauteils eingebracht. Anschließend wird zur Herstellung der vorgefertigten Baugruppe der das vormontierte Anlaufscheibenelement aufweisende Gelenkbolzen mit einem an den ersten Bolzenabschnitt anschließenden zweiten Bolzenabschnitt in den Buchsenabschnitt der Gelenkbuchse eingeführt und die Gelenkbuchse anschließend am Gelenkbolzen verliergesichert.

Vorteilhaft kann der Gelenkbolzen der vorgefertigten Baugruppe über zumindest einen unmittelbar an den zweiten Bolzenabschnitt anschließenden und über die Gelenkbuchse hinausstehenden dritten Bolzenabschnitt mit einem zweiten Bauteil verbunden werden, vorzugsweise mittels Nieten, und damit schnell und einfach mittels der vorgefertigen Baugruppe eine Gelenkverbindung zwischen zwei Bauteilen hergestellt werden.

Weiterhin vorteilhaft wird das Anlaufscheibenelement nach dem Aufschieben auf den ersten Bolzenabschnitt am Gelenkbolzen verliergesichert, und zwar wird zur Verliersicherung des vom ersten Bolzenabschnitt aufgenommenen Anlaufscheibenelementes am Gelenkbolzen das Material des Gelenkbolzens zwischen dem ersten und zweiten Bolzenabschnitt gestuft ausgebildete Bereich des Gelenkbolzens plastisch verformt.

Analog hierzu wird zur Verliersicherung der vom zweiten Bolzenabschnitt aufgenommenen Gelenkbuchse am Gelenkbolzen das Material des Gelenkbolzens zwischen dem zweiten und dritten Bolzenabschnitt gestuft ausgebildeten Bereich des Gelenkbolzens plastisch verformt.

Vorteilhaft wird der Gelenkbolzen mittels des Anlaufscheibenelementes zwischen dem Bolzenkopf und der Oberseite des ersten Bauteils axial gelagert.

In einer Ausführungsvariante der Erfindung wird der Buchsenabschnitt der als Bundlager ausgebildeten Gelenkbuchse verdrehsicher in die erste Öffnung des Bauteils eingebracht, wobei die Gelenkbuchse aus einem dünnwandigen Material, vorzugsweise Kunststoff oder Metall, insbesondere Stahl oder Bronze und das Anlaufscheibenelementes aus Kunststoff hergestellt werden.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: ein schematischer Längsschnitt durch eine erfindungsgemäße Gelenkbolzena nordnung,
- Fig. 2: eine schematischer Längsschnitt durch bzw. Seitenansicht eines Gelenkbolzens der erfindungsgemäßen Gelenkbolzenanordnung,
- Fig. 3a: eine Draufsicht auf ein Anlaufscheibenelement,
- Fig. 3b: eine Seitenansicht des Anlaufscheibenelement gemäß Figur 3a,
- Fig. 3c: einen Schnitt entlang der Linie A-A durch das Anlaufscheibenelement gemäß Figur 3a,
- Fig. 4: eine schematischer Längsschnitt durch einen Gelenkbolzen gemäß Figur 2 mit daran montierten Anlaufscheibenelement gemäß der Figuren 3a - 3c,
- Fig. 5a: eine Draufsicht auf eine als Bundlager ausgebildete Gelenkbuchse,
- Fig. 5b: einen Schnitt entlang der Linie A-A durch die als Bundlager ausgebildete Gelenkbuchse gemäß Figur 5b und
- Fig. 6: einen Längsschnitt durch eine an eine vorgefertigte Baugruppe umfassend ein an einem ersten Bauteil vormontierte Gelenkanordnung gemäß Figur 1 ohne zweites Bauteil.

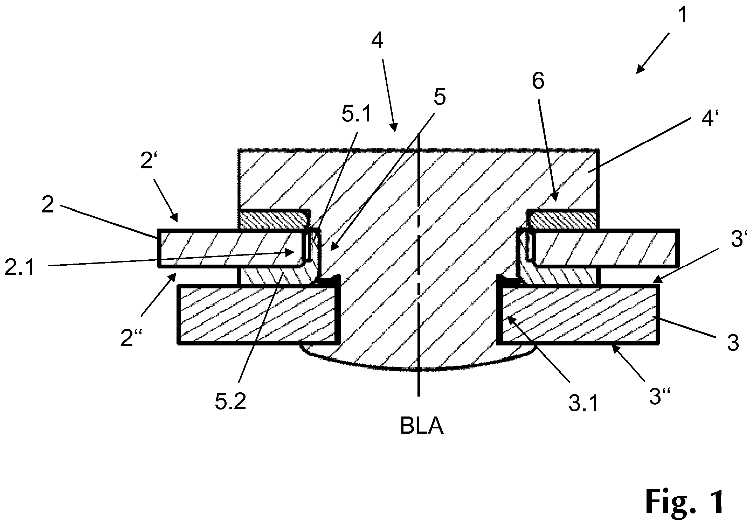

In der Figur 1 ist beispielhaft ein Schnitt durch eine erfindungsgemäß ausgebildete Gelenkanordnung 1 zwischen einem ersten Bauteil 2 und einem zweiten Bauteil 3 im montierten Zustand dargestellt.

Das erste und zweite Bauteil 2, 3 sind vorzugsweise aus Metall, beispielsweise aus Stahlblech durch Stanzen und Biegen gefertigte Werkstücke oder Bauteile. Beispielsweise ist das erste Bauteil 2 durch Stanzen aus einem metallischen Flachmaterial, beispielsweise aus Stahlblech hergestellt, und zwar in einem in einer Presse angeordneten Folge- oder Stufenwerkzeug. Das zweite Bauteil 3 ist beispielsweise ein Element eines Gestänges, welches über die Gelenkanordnung 1 gelenkig mit dem ersten Bauteil 2 verbunden ist. Es versteht sich, dass prinzipiell beliebig ausgebildete und/oder geformte Bauteile 2, 3 Verwendung finden können, die über eine Gelenkanordnung 1 miteinander verbindbar sind, ohne dass hierdurch der Erfindungsgedanke verlassen wird.

Im Folgenden wird die erfindungsgemäße Gelenkanordnung 1 anhand eines ersten und zweiten, jeweils als blechförmiges Metallbauteil ausgebildetes Bauteils 2, 3 beschrieben, welche in den Figuren lediglich schematisch dargestellt sind. Das erste und zweite Bauteil 2, 3 weisen jeweils eine Oberseite 2', 3' und eine Unterseite 2", 3" auf, welche zumindest im Bereich der Gelenkanordnung 1 flach bzw. eben ausgebildet sind und somit zumindest im Bereich der Gelenkanordnung 1 eine flache bzw. eben Anlagefläche bilden.

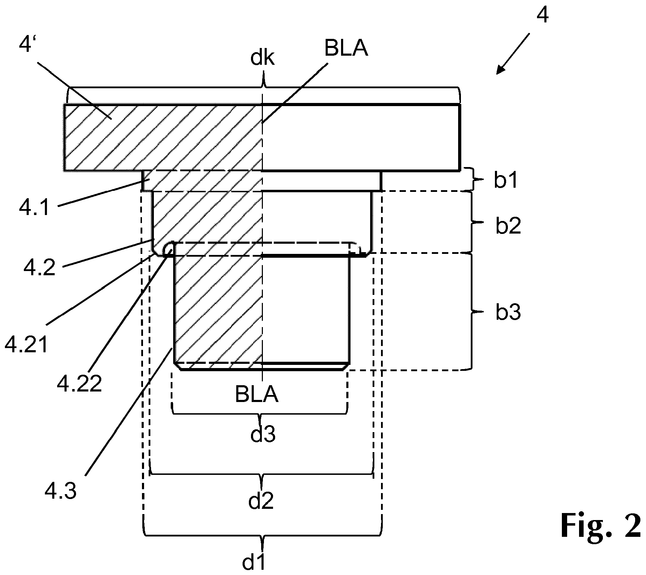

Die erfindungsgemäße Gelenkanordnung 1 umfasst einen sich entlang einer Bolzenlängsachse BLA erstreckenden Gelenkbolzen 4 mit einem Bolzenkopf 4' und mehreren Bolzenabschnitten 4.1, 4.2, 4.3 mit unterschiedlichen Durchmessern d1 bis d3 und/oder Breiten b1 bis b3, die sich an den Bolzenkopf 4' entlang der Bolzenlängsachse BLA aneinander anschließen. Hierdurch ergibt sich ein mehrfach gestufter Randverlauf des Gelenkbolzens 4 entlang der Bolzenlängsachse BLA. Figur 2 zeigt beispielhaft eine Seitenansicht bzw. Teillängsschnitt eines derartigen Gelenkbolzens 4. Im montierten Zustand der Gelenkanordnung 1 gemäß Figur 1 verläuft die Bolzenlängsachse BLA senkrecht zu der Oberseite 2', 3' und/oder Unterseite 2", 3" der blechförmigen Metallbauteile 2, 3, und zwar im Bereich der Gelenkanordnung 1.

In einer bevorzugten Ausführungsvariante weist der Gelenkbolzen 4 zumindest einen ersten Bolzenabschnitt 4.1 mit einem ersten Durchmesser d1, einen zweiten Bolzenabschnitt 4.2 mit einem zweiten Durchmesser d2 und einen dritten Bolzenabschnitt 4.3 mit einem dritten Durchmesser d3 auf, die sich an den Bolzenkopf 4' entlang der Bolzenlängsachse BLA nacheinander anschließen. Hierbei nimmt der erste bis dritte Durchmesser d1 bis d3 der ersten bis dritten Bolzenabschnitte 4.1 bis 4.3 ausgehend vom Bolzenkopf 4' entlang der Bolzenlängsachse BLA ab, und zwar ist der erste Durchmesser d1 größer als der zweite Durchmesser d2 und der zweite Durchmesser d2 größer als der dritte Durchmesser d3 gewählt. Ferner weist der Bolzenkopf 4' einen Kopfdurchmesser dk auf, welcher größer als der erste bis dritte Durchmesser d1 bis d2, vorzugsweise mindestens dem 2 fachen des dritten Durchmessers d3 und/oder dem 1,5 fachen des ersten bzw. zweiten Durchmessers d1, d2 entspricht.

Schließlich weisen die Bolzenabschnitte 4.1, 4.2, 4.3 unterschiedliche Breiten b1 bis b3 entlang der Bolzenlängsachse BLA auf, und zwar weist der erste Bolzenabschnitt 4.1 eine erste Breite b1, der zweite Bolzenabschnitt 4.2 eine zweite Breite b2 und der dritte Bolzenabschnitt 4.3 eine dritte Breite b3 auf. Die erste Breite b1 ist kleiner als die zweite Breite b2 und die zweite Breite b2 ist kleiner als die dritte Breite b3 gewählt, d.h. die Breiten b1 bis b3 der Bolzenabschnitte 4.1, 4.2, 4.3 nehmen ausgehend vom Bolzenkopf 4' entlang der Bolzenlängsachse BLA zu.

Aufgrund der unterschiedlichen Durchmesser d1 bis d3 der Bolzenabschnitte 4.1, 4.2, 4.3 ergibt sich ein Gelenkbolzen 4 mit einem mehrfach gestuften Randverlauf, wobei im gestuften Bereich zwischen dem zweiten und dritten Bolzenabschnitt 4.2, 4.3 ein sich um die Bolzenlängsachse BLA erstreckender ringförmiger Vorsprung 4.21 entsteht, der eine ringförmige Nut 4.22 umschließt. Der ringförmige Vorsprung 4.21 ist beispielsweise derart hergestellt, dass in die im Übergang zwischen dem zweiten und dritten Bolzenabschnitt 4.2, 4.3 entstehende, in einer Ebene senkrecht zur Bolzenlängsachse BLA verlaufende, stirnseitige Ringfläche des zweiten Bolzenabschnittes 4.2 eine den dritten Bolzenabschnitt 4.3 unmittelbar umschließende ringförmige Nut 4.22 eingeformt ist. Der ringförmige Vorsprung 4.21 kann beispielsweise eine schräg zur Bolzenlängsachse BLA verlaufende und nach außen gerichtete Fase aufweisen. Auch das freie Ende des dritten Bolzenabschnittes 4.3 weist beispieslweise in einer Ausführungsvariante eine schräg zur Bolzenlängsachse BLA verlaufende und nach außen gerichtete Fase auf.

Bei der erfindungsgemäßen Gelenkanordnung 1 ist in zumindest einer ersten Öffnung 2.1 des ersten Bauteils 2 eine Gelenkbuchse 5 zumindest abschnittsweise aufgenommen, durch welche der Gelenkbolzen 4 hindurch geführt ist und über die Gelenkbuchse 5 hinaus nach außen weg steht, und zwar zumindest mit dem seinem dritten Bolzenabschnitt 4.3. Die Gelenkbuchse 5 bildet ein Gleitlager aus.

Im vorliegenden Ausführungsbeispiel ist der zweite Bolzenabschnitt 4.2 zumindest abschnittsweise in der ersten Öffnung 2.1 aufgenommen bzw. von dieser unmittelbar umschlossen. Der dem Bolzenkopf 4' gegenüberliegende und aus der Gelenkbuchse 5 hervorstehende dritte Bolzenabschnitt 4.3 ist im montierten Zustand der Gelenkanordnung 1 am zweiten Bauteil 3 befestigbar, und zwar vorzugsweise mittels einer Nietverbindung.

Figur 1 zeigt beispielsweise eine derartige Nietverbindung des dritten Bolzenabschnittes 4.3 mit dem zweiten Bauteil 3, welcher durch eine darin vorgesehene zweite Öffnung 3.1 geführt und anschließend dessen über das zweite Bauteil 3 hinausstehende freie Ende durch Nieten entsprechend verformt ist.

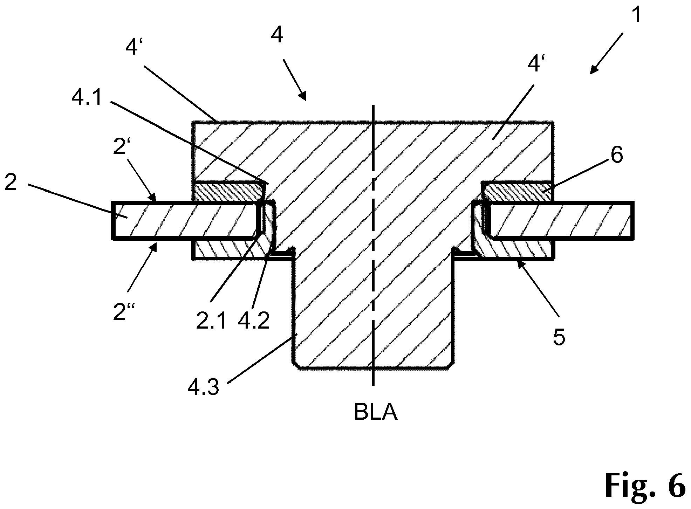

Alternativ hierzu zeigt Figur 6 einen Längsschnitt durch eine vorgefertigte Baugruppe umfassend ein erstes Bauteil 2 mit einer erfindungsgemäßen Gelenkanordnung 1, wobei die Nietverbindung des freien Endes des dritten Bolzenabschnittes 4.3 mit dem zweiten Bauteil 3 erst zu einem späteren Zeitpunkt im Rahmen des Fertigungsprozesses hergestellt wird.

Erfindungsgemäß ist bei der Gelenkanordnung 1 zwischen dem Bolzenkopf 4' und der Oberseite 2' des ersten Bauteils 2 ein Anlaufscheibenelement 6 aufgenommen und die Gelenkbuchse 5 als Bundlager, insbesonder Bundgleitlager mit einem in der ersten Öffnung 2.1 aufgenommenen Buchsenabschnitt 5.1 und einen daran anschließenden ringförmigen Bundabschnitt 5.2 ausgebildet, wobei der ringförmige Bundabschnitt 5.2 zwischen der Unterseite 2' des ersten Bauteils 2 und der Oberseite 3' des zweiten Bauteils 3 aufgenommen ist. Der Buchsenabschnitt 5.1 und der ringförmige Bundabschnitt 5.2 erstrecken sich somit im montierten Zustand konzentrisch um die Bolzenlängsachse BLA, wobei der Buchsenabschnitt 5.1 hülsenförmige ausgebildet ist und der ringförmige Bundabschnitt 5.2 in einer parallel zur Unterseite 2' des ersten Bauteils 2 bzw. Oberseite 3' des zweiten Bauteils 3 orientierten Ebene angeordnet ist.

Hierbei bildet der ringförmige Bundabschnitt 5.2 eine zentrale Durchführungsöffnung 5.3 aus, die sich schließt an den ringförmigen Bundabschnitt 5.2 anschließt, und zwar derart, dass die den Buchsenabschnitt 5.1 bildende Wandung der Gelenkbuchse 5 konzentrisch zur Mittellängsachse der zentralen Durchführungsöffnung 5.3 verläuft, wobei im montierten Zustand der Gelenkbolzen 4 mit seinem zweiten Bolzenabschnitt 4.2 in der zentralen Durchführungsöffnung 5.3 aufgenommen ist. Die Abmessungen der zentralen Durchführungsöffnung 5.3 bzw. des ringförmigen Bundabschnittes 5.2 sind hierbei an die Abmessungen des zweiten Bolzenabschnittes 4.2 angepasst. Insbesondere fällt die Mittellängsachse der zentralen Durchführungsöffnung 5.3 mit der Bolzenlängsachse BLA zusammen.

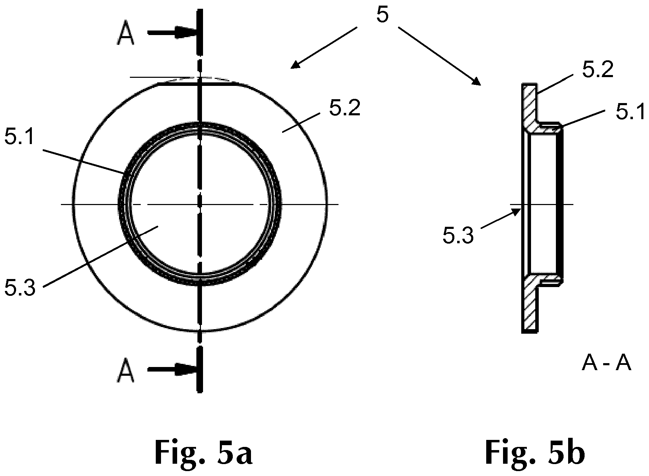

Der Übergangsbereich zwischen dem hülsenförmig ausgebildeten Buchsenabschnitt 5.1 und dem ringförmigen Bundabschnitt 5.2 ist vorzugsweise abgerundet, wie dies beispielsweise aus den Figuren 1, 5b und 6 ersichtlich ist. Die Gelenkbuchse 5 ist vorzugsweise aus einem dünnwandigen, zur Herstellung von Gelenkbuchsen 5 geeigneten Material, beispielsweise Kusntstoff oder Metall, insbesondere Stahl oder Bronze hergestellt. Besonders bevorzugt finden aus Kunststoff hergestellte Gleitlagerbuchsen 5 Verwendung, welche kostengünstig und wartungsfrei sind.

In einer weiteren bevorzugten Ausführungsvariante weist die als Bundlager ausgebildete Gelenkbuchse 5 an der Außenseite des Buchsenabschnitt 5.1 eine Riffelung auf, die sich vorzugsweise entlang der Bolzenlängsachse BLA bzw. der Mittellängsachse der zentralen Durchführungsöffnung 5.3 erstreckt. Mittels der Riffelung ist eine verdrehungssichere Montage der Gelenkbuchse 5 in der ersten Öffnung 2.1 des ersten Bauteils 1 möglich.

Das Anlaufscheibenelement 6 ist scheibenförmig mit einer zentralen Öffnung 6.1 ausgebildet, welche zur Durchführung und Aufnahme des ersten Bolzenabschnittes 4.1 vorgesehen ist. Vorzugsweise entspricht der Durchmesser der zentralen Öffnung 6.1 zumindest dem ersten Durchmesser d1 des ersten Bolzenabschnittes 4.1, und zwar derart, dass das Anlaufscheibenelement 6 auf den ersten Bolzenabschnitt 4.1 aufschiebbar ist und am Bolzenkopf 4' zur Anlage gelangt. Der die zentrale Öffnung 6.1 des Anlaufscheibenelements 6 einschließende innere Randabschnitt 6' des Anlaufscheibenelements 6 weist eine vorzugsweise beidseitige Fasung auf, die schräg zur Mittellängsachse er zentralen Öffnung 6.1 bzw. im montierten Zustand der Bolzenlängsachse BLA verläuft.

Das Anlaufscheibenelement 6 ist vorzugsweise aus Kunststoff hergestellt und dient zur flächigen axialen Lagerung des Gelenkbolzens 4 gegenüber dem ersten Bauteil 2, insbesondere des Bolzenkopfes 4' gegenüber der Oberseite 2' des ersten Bauteils 2. Derartige Anlaufscheibenelemente 6 aus Kunststoff sind besonders vorteilhaft schmiermittel- und wartungsfrei und deren Aufbau und Funktionsweise ist an sich aus dem Stand der Technik. Vorzugsweise weist das Anlaufscheibenelement 6 einen Außendurchmesser auf, der beispielsweise dem Kopfdurchmesser dk des Bolzenkopfes 4' entspricht.

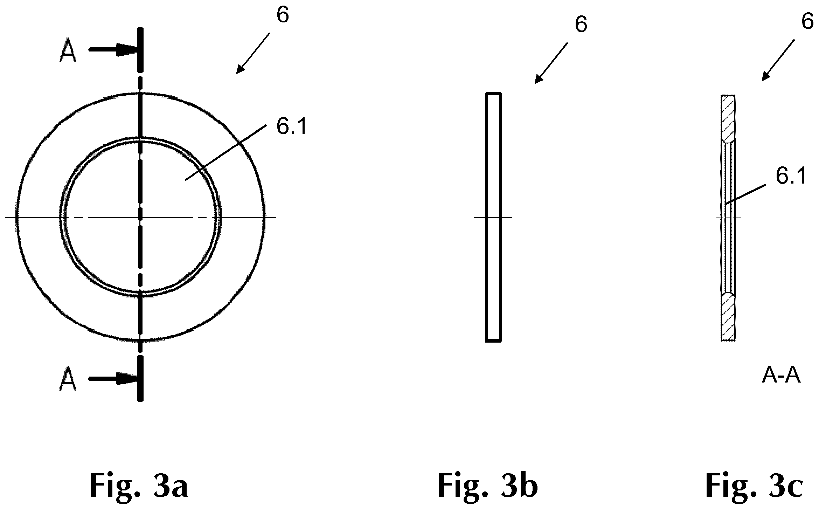

In den Figuren 3a bis 3c ist beispielhaft ein derartiges Anlaufscheibenelement 6 in unterschiedlichen Ansichten dargestellt, und zwar zeigt Figur 3a eine Draufsicht auf die Oberseite des Anlaufscheibenelementes 6, Figur 3b eine Seitenansicht des Anlaufscheibenelementes 6 und Figur 3c einen Schnitt entlang der Linie A-A durch das Anlaufscheibenelement 6 gemäß Figur 3a. Insbesondere der Figur 3c sind die beiden gegenüberliegenden Fasen in dem die zentrale Öffnung 6.1 umschließenden inneren Randbereich des Anlaufscheibenelementes 6 zu entnehmen.

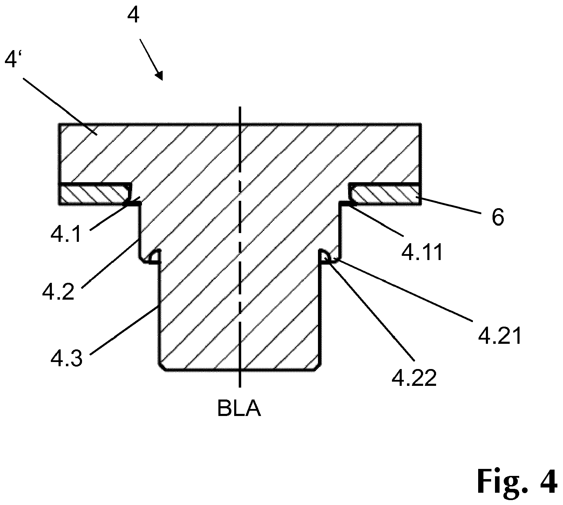

Figur 4 zeigt beispielsweise einen Längsschnitt durch einen Gelenkbolzen 4 mit einem montierten bzw. vormontierten Anlaufscheibenelement 6. Das vom ersten Bolzenabschnitt 4.1 aufgenommene Anlaufscheibenelement 6 wird bei dieser Ausführungsvariante durch eine geringfügige plastische Verformung (Verstemmen) des Materials des Gelenkbolzens 4 im Bereich der Stufe zwischen dem ersten und zweiten Bolzenabschnitten 4.1, 4.2 am Gelenkbolzen 4 gesichert, vorzugsweise verliergesichert. Hierzu wird der freie Stufenrand in einen sich näherungsweise konzentrisch um die Bolzenlängsachse BLA, in die Fase des Anlaufscheibenelementes 6 ringförmig erstreckenden Vorsprung 4.11. verformt. Der ringförmige Vorsprung 4.11 steht hierbei leicht über den Umfang des ersten Bolzenabschnittes 4.1 weg und wird von der Fase des Anlaufscheibenelementes 6 aufgenommen. Die plastische Verformung des Gelenkbolzens 4 erfolgt vorzugsweise mittels eines geeigneten Formwerkzeug, insbesondere Stemmwerkzeugs.

Nach erfolgter Montage bzw. Vormontage des Anlaufscheibenelementes 6 auf dem ersten Bolzenabschnitt 4.1 des Gelenkbolzens 4 wird der Gelenkbolzen mit vormontiertem Anlaufscheibenelement 6 zur Herstellung der Gelenkanordnung 1 durch die erste Öffnung 2.1 des ersten Bauteils 2 geführt, und zwar durch die bereits in der ersten Öffnung 2.1 aufgenommene oder in einem gemeinsamen Montageschritt eingeführte, als Bundlager ausgebildete Gelenkbuchse 5. Hierzu ist bzw. wird die erste Gelenkhülse 5 mit ihrem Buchsenabschnitt 5.1 von der Unterseite 2" des ersten Bauteils 2 in die erste Öffnung 2.1 eingeführt und der Gelenkbolzen 4 wird mit seinem zweiten und dritten Bolzenabschnitt 4.2, 4.3 durch die vom ringförmigen Buchsenabschnitt 5.1 der Gelenkbuchse 5 eingeschlossene Durchführungsöffnung 5.3 hindurchgeführt, und zwar derart, dass der zweite Buchsenabschnitt 4.2 von dem ringförmigen Buchsenabschnitt 5.1 vorzugsweise vollständig aufgenommen ist und der freie stirnseitige Rand des Buchsenabschnittes 5.1 an der zwischen dem ersten und zweiten Bolzenabschnitt 4.1, 4.2 gebildeten Stufenfläche bzw. die in einer Ebene senkrecht zur sich Bolzenlängsachse BLA stirnseitigen Ringfläche des ersten Bolzenabschnittes 4.1 anliegt. Die Oberseite 2' des ersten Bauteils 2 schließt hierbei unmittelbar entlang der Bolzenlängsachse BLA an das Anlaufscheibenelement 6 bzw. kommt mit diesen zur Anlage. Der ringförmige Bundabschnitt 5.2 der mit ihren Buchsenabschnitt 5.1 in die erste Öffnung 2.1 eingeführten Gelenkbuchse 5 kommt mit der Unterseite 2" zur Anlage und schließt somit unmittelbar an das erste Bauteil 1 an. Das Anlaufscheibenelement 6 und die als Bundlager ausgebildete Gelenkbuchse 5 umschließen somit die erste Öffnung 2.1 des ersten Bauteils 1 und bilden damit die Gelenkanordnung 1 aus.

Zur Sicherung der Gelenkbuchse 5 am Gelenkbolzen 4 wird der ringförmige Vorsprung 4.21 im gestuften Übergangsbereich zwischen dem zweiten und dritten Bolzenabschnitt 4.2, 4.3 plastisch nach außen, d.h. in radialer Richtung zur Bolzenlängsachse BLA verformt, und zwar derart, dass dieser den abgerundeten Übergangsbereich zwischen dem Buchsenabschnittes 5.1 und dem ringförmigen Bundabschnitt 5.2 im Bereich des dem Bolzenkopf 4' gegenüberliegenden Ende der Durchführungsöffnung 5.3 hintergreift. Damit ist sowohl das Anlaufscheibenelement 6 im Bereich des ersten Bolzenabschnittes 4.1 als auch die Gelenkbuchse 5 im Bereich des zweiten Bolzenabschnittes 4.2 jeweils am Gelenkbolzen 4 verliergesichert.

Die derart am ersten Bauteil 1 montierte Gelenkanordnung 1 bildet beispielsweise eine vorgefertigte Baugruppe, insbesondere Gelenkbaugruppe gemäß der Figur 6, welche im Rahmen des vorzugsweise maschinellen Fertigungsprozesses mit dem zweiten Bauteil 3 zur Herstellung der Gelenkverbindung zwischen beiden Bauteilen 2, 3 verbunden wird. Hierzu wird - wie zuvor beschrieben - der von der Gelenkbuchse 5 weiterhin mit seinem dritten Bolzenabschnitt 4.3 nach außen wegstehende Gelenkbolzen 4 durch die zweite Öffnung 3.1 im zweiten Bauteil 3 hindurchgeführt und mit diesem fest verbunden, vorzugsweise vernietet, beispielsweise mittels eines Taumel-Niet-Verfahrens dort verankert.

Die Herstellung des ersten Bauteils 2 erfolgt beispielsweise in einem in einer Arbeitsvorrichtung, beispielsweise mittels eines in einer Presse vorgesehenen Folge- oder Stufenwerkzeuges, in welchem in mehreren Arbeitsschritten die ersten Bauteile 2 beispielsweise durch Stanzen und Formen erzeugt und hierbei u.a. auch die erste Öffnung 2.1 in das jeweilige Bauteil 2 eingebracht wird. In diesem Folge- oder Stufenwerkzeug erfolgt auch das Einbringen der Gelenkbuchse 5, das Einsetzen des mit dem Anlaufscheibenelement 6 versehenen Gelenkbolzen 4 und das Sichern des Gelenkbolzens 4 in der Gelenkbuchse 5, und zwar derart, dass der Gelenkbolzen 4 zwar drehbar in der jeweiligen Gelenkbuchse 5 aufgenommen ist, jedoch gegen ein Herausfallen aus der Gelenkbuchse 5 gesichert ist. Durch die erfindungsgemäße Kombination und Anorndung der Gelenkbuchse 5 und des zugehörigen Anlaufscheibenelementes 6 ist besonders vorteilhaft eine Verliersicherung auch bei Herstellung beider Bauteile aus Kunststoff möglich.

In der vorliegenden Ausführungsvariante entspricht die erste Breite b1 des ersten Bolzenabschnitts 4.1 näherungsweise der Materialstärke des Anlaufscheibenelementes 6 sowie die zweite Breite b2 des zweiten Bolzenabschnitts 4.2 der Materialstärke des ersten Bauteils 2 im Gelenkbereich und der Materialstärke des ringförmigen Bundabschnitt 5.2 der Gelenkbuchse 5. Die dritte Breite b3 des dritten Bolzenabschnitts 4.3 ist vorzugsweise größer als die Materialstärke des zweiten Bauteils 3 im Gelenkbereich gewählt, um ein Vernieten des freien Endes.

Ferner betrifft die Erfindung ein Verfahren zur Herstellen einer zuvor beschriebenen Gelenkanordnung 1 zwischen zumindest einem ersten und zweiten, jeweils eine Ober- und Unterseite 2', 3', 2", 3" aufweisenden Bauteil 2, 3. Die herzustellende Gelenkanordnung 1 umfasst zumindest den Gelenkbolzen 4 mit dem Bolzenkopf 4' und die mehreren entlang einer Bolzenlängsachse BLA hintereinander angeordneten Bolzenabschnitte 4.1, 4.2, 4.3, die Gelenkbuchse 5 und das Anlaufscheibenelement 6, wobei die Gelenkbuchse 5 erfindungsgemäß als Bundlager mit einem Buchsenabschnitt 5.1 und einen daran anschließenden ringförmigen Bundabschnitt 5.2 hergestellt ist. In einer Ausführungsvarianten wird auf den sich an den Bolzenkopf 4' unmittelbar anschließenden ersten Bolzenabschnitt 4.1 das Anlaufscheibenelement 6 aufschoben und vorzugsweise daran vormontiert. Vorzugsweise wird das Anlaufscheibenelement 6 nach dem Aufschieben auf den ersten Bolzenabschnitt 4.1 am Gelenkbolzen 4 verliergesichert.

Die derart vorbereiteten Gelenkbolzen 4 mit jeweils einem verliergesichert vormontierten Anlaufscheibenelement 6 werden in einem nächsten Schritt in den Buchsenabschnittes 5.1 des Gelenkbolzen eingeführt, wobei die Gelenkbuchse 5 jedoch zuvor mit dem Buchsenabschnitt 5.1 in eine erste Öffnung 2.1 des ersten Bauteils 2 eingebracht wird, d.h. erst im Anschluss daran wird zur Herstellung der Gelenkanordnung 1 der das vormontierte Anlaufscheibenelement 6 aufweisende Gelenkbolzen 4 mit einem an den ersten Bolzenabschnitt 4.1 anschließenden zweiten Bolzenabschnitt 4.2 in den Buchsenabschnitt 5.1 der Gelenkbolzen eingeführt und die Gelenkbuchse 5 am Gelenkbolzen 4 verliergesichert. Dies kann beispielsweise in einem mit einem Folgewerkzeug oder in mehreren Arbeitsgängen mit unterschiedlichen Werkzeugen erfolgen.

Ein derart vorgefertiges Bauteil 2 mit Gelenkanordnung 1 wird anschließend vorzugsweise mittels Nieten mit dem zweiten Bauteil 3 verbunden. Hierzu wird der Gelenkbolzen 4 über zumindest den unmittelbar an den zweiten Bolzenabschnitt 4.2 anschließenden und über die Gelenkbuchse 5 hinausstehenden dritten Bolzenabschnitt 4.3 mit dem zweiten Bauteil 3 verbunden, vorzugsweise mittels Nieten.

Mittels der erfindungsgemäßen Gelenkanordnung 1 wird der Gelenkbolzen 4 mittels des Anlaufscheibenelementes 6 zwischen dem Bolzenkopf 4' und der Oberseite 2' des ersten Bauteils 2 mittels der Gelenkbuchse 5 axial gelagert, und zwar derart, dass das erste Bauteil 2 drehbar um die Bolzenlängsachse BLA mit dem zweiten Bauteil 3 verbunden ist. Hierzu werden die Gelenkbuchse 5 vorzugsweise aus einem dünnwandigen Metall und das Anlaufscheibenelementes 6 aus Kunststoff hergestellt.

Zur Verliersicherung des vom ersten Bolzenabschnitt 4.1 aufgenommenen Anlaufscheibenelementes 6 am Gelenkbolzen 4 werden der zwischen dem ersten und zweiten Bolzenabschnitt 4.1, 4.2 gestuft ausgebildete Bereich des Gelenkbolzens 4 plastisch verformt, und zwar wie zuvor beschrieben. Analog hierzu wird zur Verliersicherung der vom zweiten Bolzenabschnitt 4.2 aufgenommenen Gelenkbuchse 5 am Gelenkbolzen der zwischen dem zweiten und dritten Bolzenabschnitt 4.2, 4.3 gestuft ausgebildete Bereich des Gelenkbolzens 4 plastisch verformt.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Gelenkanordnung
- 2: erstes Bauteil
- 2': Oberseite
- 2": Unterseite
- 2.1: erste Öffnung
- 3: zweites Bauteil
- 3': Oberseite
- 3": Unterseite
- 3.1: zweite Öffnung
- 4: Gelenkbolzen
- 4': Bolzenkopf
- 4.1: erster Bolzenabschnitt
- 4.11: ringförmiger Vorsprung
- 4.2: zweiter Bolzenabschnitt
- 4.21: ringförmiger Vorsprung
- 4.22: ringförmige Nut
- 4.3: dritter Bolzenabschnitt
- 5: Gelenkbuchse
- 5.1: Buchsenabschnitt
- 5.2: ringförmiger Bundabschnitt
- 5.3: Durchführungsöffnung
- 6: Anlaufscheibenelement
- 6.1: zentrale Öffnung
- b1: erste Breite
- b2: zweite Breite
- b3: dritte Breite
- BLA: Bolzenlängsachse
- d1: erster Durchmesser
- d2: zweiter Durchmesser
- d3: dritter Durchmesser
- dk: Bolzenkopfdurchmesser

## Patentansprüche

1. Gelenkanordnung zwischen zumindest einem ersten und zweiten, jeweils eine Ober- und Unterseite (2', 3', 2", 3") aufweisenden Bauteil (2, 3), vorzugsweise blechförmigen Metallbauteil umfassend eine in einer ersten Öffnung (2.1) des ersten Bauteils (2) aufgenommene Gelenkbuchse (5) und einen durch die Gelenkbuchse hindurchgeführten Gelenkbolzen (4) mit einem Bolzenkopf (4'), wobei der dem Bolzenkopf (4') gegenüberliegende und aus der Gelenkbuchse (5) vorstehende Bolzenabschnitt (4.3) am zweiten Bauteil (3) vorzugsweise mittels einer Nietverbindung befestigbar ist, wobei zwischen dem Bolzenkopf (4') und der Oberseite (2') des ersten Bauteils (2) ein Anlaufscheibenelement (6) aufgenommen ist, wobei die Gelenkbuchse (5) als Bundlager mit einem in der ersten Öffnung (2.1) aufgenommenen Buchsenabschnitt (5.1) und einen daran anschließenden ringförmigen Bundabschnitt (5.2) ausgebildet ist, wobei der ringförmige Bundabschnitt (5.2) an der Unterseite (2") des ersten Bauteils (2) anliegt, **dadurch gekennzeichnet, dass** das Anlaufscheibenelement (6) und/oder die als Bundlager ausgebildete Gelenkbuchse (5) am Gelenkbolzen (4) verliergesichert gehalten sind.

2. Gelenkanordnung nach Anspruch 1, **dadurch gekennzeichnet, dass** der Gelenkbolzen (4) zumindest einen ersten bis dritten Bolzenabschnitt (4.1 bis 4.3) aufweisen, die sich an den Bolzenkopf (4') entlang der Bolzenlängsachse (BLA) hintereinander anschließen und unterschiedliche Durchmesser (d1 bis d3) aufweisen, so dass sich ein Gelenkbolzen (4) mit einem mehrfach gestuften Randverlauf ergibt.

3. Gelenkanordnung nach Anspruch 1 oder 2, **dadurch gekennzeichnet, dass** das Anlaufscheibenelement (6) unmittelbar am Bolzenkopf (4') und an der Oberseite (2') des ersten Bauteils (2) anliegt.

4. Gelenkanordnung nach einem der Ansprüche 1 bis 3, **dadurch gekennzeichnet, dass** der Gelenkbolzen (4) zumindest einen ersten Bolzenabschnitt (4.1) mit einem ersten Durchmesser (d1) und einer ersten Breite (b1), einen zweiten Bolzenabschnitt (4.2) mit einem zweiten Durchmesser (d2) und einer zweiten Breite (b2) und einen dritten Bolzenabschnitt (4.3) mit einem dritten Durchmesser (d3) und einer dritten Breite (b3) aufweist, wobei der erste bis dritte Durchmesser (d1 bis d3) und/oder die erste bis dritte Breite (b1 bis b3) jeweils unterschiedlich gewählt sind, wobei der erste Durchmesser (d1) größer als der zweite Durchmesser (d2) und der zweite Durchmesser (d2) größer als der dritte Durchmesser (d2) sind.

5. Gelenkanordnung nach einem der vorhergehenden Ansprüche, **dadurch gekennzeichnet, dass** der Buchsenabschnitt (5.1) der als Bundlager ausgebildeten Gelenkbuchse (5) verdrehsicher in der ersten Öffnung (2.1) des Bauteils (2) aufgenommen ist und/oder der Buchsenabschnitt (5.1) der als Bundlager ausgebildeten Gelenkbuchse (5) an seiner Außenseite eine Riffelung aufweist.

6. Gelenkanordnung nach einem der vorhergehenden Ansprüche, **dadurch gekennzeichnet, dass** das Anlaufscheibenelement (6) am ersten Bolzenabschnitt (4.1) und/oder die Gelenkbuchse (5) am zweiten Bolzenabschnitt (4.2) verliergesichert sind und/oder dass der ringförmige Bundabschnitt (5.2) zwischen der Unterseite (2") des ersten Bauteils (2) und der Oberseite (3') des zweiten Bauteils (3) aufgenommen ist.

7. Gelenkanordnung nach Anspruch 6, **dadurch gekennzeichnet, dass** das vom ersten Bolzenabschnitt (4.1) aufgenommene Anlaufscheibenelement (6) durch eine geringfügige plastische Verformung des Materials des Gelenkbolzens (4) im Bereich der Stufe zwischen dem ersten und zweiten Bolzenabschnitt (4.1, 4.2) am Gelenkbolzen (4) gesichert ist.

8. Gelenkanordnung nach einem der vorhergehenden Ansprüche 2 bis 7, **dadurch gekennzeichnet, dass** der Gelenkbolzen (4) im gestuften Bereich zwischen dem zweiten und dritten Bolzenabschnitt (4.2, 4.3) einen sich um die Bolzenlängsachse (BLA) erstreckenden ringförmigen Vorsprung (4.21) aufweist, der eine ringförmige Nut (4.22) umschließt.

9. Gelenkanordnung nach Anspruch 7 und 8, **dadurch gekennzeichnet, dass** die im Bereich des zweiten Bolzenabschnitts (4.2) aufgenommene Gelenkbuchse (5) durch plastisches Verformen des ringförmigen Vorsprunges (4.21) des zweiten Bolzenabschnitts (4.2) nach außen, d.h. in radialer Richtung zur Bolzenlängsachse (BLA), am zweiten Bolzenabschnitt (4.2) verliergesichert ist.

10. Gelenkanordnung nach einem der vorhergehenden Ansprüche, **dadurch gekennzeichnet, dass** das Anlaufscheibenelement (6) aus Kunststoff hergestellt ist und/oder dass die Gelenkbuchse (5) aus einem dünnwandigen Material, vorzugsweise Kunststoff oder Metall, insbesondere Stahl oder Bronze hergestellt ist und/oder dass das Anlaufscheibenelement (6) zur flächigen axialen Lagerung des Gelenkbolzens (4) gegenüber dem ersten Bauteil (2) ausgebildet ist und/oder dass das Anlaufscheibenelement (6) eine zentrale Öffnung (6.1) aufweist, die zur Aufnahme des ersten Bolzenabschnittes (4.1) ausgebildet ist.

11. Gelenkanordnung nach einem der vorhergehenden Ansprüche 2 bis 10, **dadurch gekennzeichnet, dass** der aus der Gelenkbuchse (5) hervorstehende dritte Bolzenabschnitt (4.3) am zweiten Bauteil (3) mittels einer Nietverbindung befestigt ist.

12. Vorgefertigte Baugruppe einer Gelenkanordnung (1) gemäß einem der vorhergehenden Ansprüche, umfassend zumindest ein erstes, eine Ober- und Unterseite (2', 2") aufweisendes Bauteil (2), vorzugsweise blechförmiges Metallbauteil, eine in einer ersten Öffnung (2.1) des ersten Bauteils (2) aufgenommene Gelenkbuchse (5) und einen durch die Gelenkbuchse (5) hindurchgeführten Gelenkbolzen (4) mit einem Bolzenkopf (4'), wobei zwischen dem Bolzenkopf (4') und der Oberseite (2') des ersten Bauteils (2) ein Anlaufscheibenelement (6) aufgenommen ist und die Gelenkbuchse (5) als Bundlager mit einem in der ersten Öffnung (2.1) aufgenommenen Buchsenabschnitt (5.1) und einen daran anschließenden ringförmigen Bundabschnitt (5.2) ausgebildet ist, wobei der ringförmige Bundabschnitt (5.2) an der Unterseite (2") des ersten Bauteils (2) anliegt, **dadurch gekennzeichnet, dass** das Anlaufscheibenelement (6) und/oder die als Bundlager ausgebildete Gelenkbuchse (5) am Gelenkbolzen (4) verliergesichert gehalten sind.

13. Verfahren zur Herstellung einer vorgefertigten Baugruppe einer Gelenkanordnung (1) zwischen zumindest einem ersten und zweiten, zumindest eine Ober- und Unterseite (2', 3', 2", 3") aufweisenden Bauteil (2, 3), vorzugsweise blechförmigen Metallbauteil, bei dem die Gelenkanordnung (1) zumindest einen Gelenkbolzen (4) mit einem Bolzenkopf (4') und mehreren entlang einer Bolzenlängsachse (BLA) hintereinander angeordneten Bolzenabschnitten (4.1, 4.2, 4.3), eine Gelenkbuchse (5) und ein Anlaufscheibenelement (6) aufweist, wobei die Gelenkbuchse (5) als Bundlager mit einem Buchsenabschnitt (5.1) und einem daran anschließenden ringförmigen Bundabschnitt (5.2) ausgebildet ist, bei dem auf einen sich an den Bolzenkopf (4') unmittelbar anschließenden ersten Bolzenabschnitt (4.1) das Anlaufscheibenelement (6) aufgeschoben wird sowie die Gelenkbuchse (5) mit dem Buchsenabschnitt (5.1) in eine erste Öffnung (2.1) des ersten Bauteils (2) eingebracht wird, bei dem im Anschluss daran zur Herstellung der Gelenkanordnung (1) der das vormontierte Anlaufscheibenelement (6) aufweisende Gelenkbolzen (4) mit einem an den ersten Bolzenabschnitt (4.1) anschließenden zweiten Bolzenabschnitt (4.2) in den Buchsenabschnitt (5.1) der Gelenkbuchse (5) eingeführt und die Gelenkbuchse (5) anschließend am Gelenkbolzen (4) verliergesichert wird.

14. Verfahren nach Anspruch 13, **dadurch gekennzeichnet, dass** das Anlaufscheibenelement (6) nach dem Aufschieben auf den ersten Bolzenabschnitt (4.1) am Gelenkbolzen (4) verliergesichert wird und/oder dass der Gelenkbolzen (4) mittels des Anlaufscheibenelementes (6) zwischen dem Bolzenkopf (4') und der Oberseite (2') des ersten Bauteils (2) axial gelagert wird.

15. Verfahren nach einem der Ansprüche 13 bis 14, **dadurch gekennzeichnet, dass** der Buchsenabschnitt (5.1) der als Bundlager ausgebildeten Gelenkbuchse (5) verdrehsicher in der ersten Öffnung (2.1) des ersten Bauteils (2) eingebracht wird und/oder dass die Gelenkbuchse (5) aus einem dünnwandigen Material, vorzugsweise Kunststoff oder Metall und das Anlaufscheibenelementes (6) aus Kunststoff hergestellt werden.

16. Verfahren nach einem der Ansprüche 13 bis 15, **dadurch gekennzeichnet, dass** zur Verliersicherung des vom ersten Bolzenabschnitt (4.1) aufgenommenen Anlaufscheibenelementes (6) am Gelenkbolzen (4) das Material des Gelenkbolzens (4) zwischen dem ersten und zweiten Bolzenabschnitt (4.1, 4.2) gestuft ausgebildeten Bereich des Gelenkbolzens (4) plastisch verformt wird und/oder dass zur Verliersicherung der vom zweiten Bolzenabschnitt (4.2) aufgenommenen Gelenkbuchse (5) das Material des Gelenkbolzens (4) zwischen dem zweiten und dritten Bolzenabschnitt (4.2, 4.3) gestuft ausgebildeten Bereich des Gelenkbolzens (4) plastisch verformt wird.

## Claims

1. A joint arrangement between at least a first and a second component (2, 3), preferably metal component in the form of a metal sheet, each of said components having a topside and an underside (2', 3', 2", 3"), comprising a joint bushing (5) received in a first opening (2.1) of the first component (2) and a joint pin (4) passed through the joint bushing and having a pin head (4'), wherein the pin section (4.3) opposite the pin head (4') and protruding from the joint bushing (5) is attachable to the second component (3), preferably by means of a riveted connection, wherein a thrust washer element (6) is received between the pin head (4') and the topside (2') of the first component (2), wherein the joint bushing (5) is configured as a collar bearing with a bushing section (5.1) received in the first opening (2.1) and an adjoining annular collar section (5.2), wherein the annular collar section (5.2) abuts on the underside (2") of the first component (2), **characterized in that** the thrust washer element (6) and/or the joint bushing (5) configured as a collar bearing is/are captively held on the joint pin (4).

2. Joint arrangement according to claim 1, **characterized in that** the joint pin (4) has at least a first to a third pin section (4.1 to 4.3), which successively connect to the pin head (4') along the pin longitudinal axis (BLA) and have different diameters (d1 to d3), such that a joint pin (4) with a multi-stepped edge contour is formed.

3. Joint arrangement according to claim 1 or 2, **characterized in that** the thrust washer element (6) abuts directly on the pin head (4') and on the topside (2') of the first component (2).

4. Joint arrangement according to any one of claims 1 to 3, **characterized in that** the joint pin (4) has at least a first pin section (4.1) with a first diameter (d1) and a first width (b1), a second pin section (4.2) with a second diameter (d2) and a second width (b2) and a third pin section (4.3) with a third diameter (d3) and a third width (b3), wherein the first to third diameters (d1 to d3) and/or the first to third widths (b1 to b3) are each selected differently, wherein the first diameter (d1) is larger than the second diameter (d2) and the second diameter (d2) is larger than the third diameter (d2).

5. Joint arrangement according to any one of the preceding claims, **characterized in that** the bushing section (5.1) of the joint bushing (5) configured as a collar bearing is received in the first opening (2.1) of the component (2) in a manner secured against rotation and/or that the bushing section (5.1) of the joint bushing (5) configured as a collar bearing has a corrugation on its outer side.

6. Joint arrangement according to any one of the preceding claims, **characterized in that** the thrust washer element (6) is captively secured on the first pin section (4.1) and/or that the joint bushing (5) is captively secured on the second pin section (4.2) and/or that the annular collar section (5.2) is received between the underside (2") of the first component (2) and the topside (3') of the second component (3).

7. Joint arrangement according to claim 6, **characterized in that** the thrust washer element (6) received by the first pin section (4.1) is secured to the joint pin (4) by a slight plastic deformation of the material of the joint pin (4) in the area of the step between the first and second pin sections (4.1, 4.2).

8. Joint arrangement according to any one of preceding claims 2 to 7, **characterized in that** the joint pin (4) has, in the stepped area between the second and third pin sections (4.2, 4.3), an annular projection (4.21) extending about the pin longitudinal axis (BLA), which encloses an annular groove (4.22).

9. Joint arrangement according to claims 7 and 8, **characterized in that** the joint bushing (5) received in the area of the second pin section (4.2) is captively secured to the second pin section (4.2) by plastic deformation of the annular projection (4.21) of the second pin section (4.2) outwards, i.e. in a radial direction with respect to the pin longitudinal axis (BLA).

10. Joint arrangement according to any one of the preceding claims, **characterized in that** the thrust washer element (6) is made of plastic and/or that the joint bushing (5) is made of a thin-walled material, preferably plastic or metal, in particular steel or bronze, and/or that the thrust washer element (6) is configured for bearing the joint pin (4) in a planar axial manner with respect to the first component (2) and/or that the thrust washer element (6) has a central opening (6.1), which is configured for receiving the first pin section (4.1).

11. Joint arrangement according to any one of preceding claims 2 to 10, **characterized in that** the third pin section (4.3) protruding from the joint bushing (5) is fastened to the second component (3) by means of a riveted connection.

12. A prefabricated assembly of a joint arrangement (1) in accordance with any one of the preceding claims, comprising at least a first component (2), preferably a metal component in the form of a metal sheet having a topside and an underside (2', 2"), a joint bushing (5) received in a first opening (2.1) of the first component (2) and a joint pin (4) with a pin head (4') passed through the joint bushing (5), wherein a thrust washer element (6) is received between the pin head (4') and the topside (2') of the first component (2) and the joint bushing (5) is configured as a collar bearing with a bushing section (5.1) received in the first opening (2.1) and an adjoining annular collar section (5.2), wherein the annular collar section (5.2) abuts on the underside (2") of the first component (2), **characterized in that** the thrust washer element (6) and/or the joint bushing (5) configured as a collar bearing is/are captively held on the joint pin (4).

13. A method for producing a prefabricated assembly of a joint arrangement (1) between at least a first and second component (2, 3), preferably a metal component in the form of a metal sheet, having at least a topside and an underside (2', 3' 2", 3"), in which the joint arrangement (1) has at least one joint pin (4) with a pin head (4') and a plurality of pin sections (4.1, 4.2, 4.3) arranged in succession along a pin longitudinal axis (BLA), a joint bushing (5) and a thrust washer element (6), wherein the joint bushing (5) is configured as a collar bearing with a bushing section (5.1) and an adjoining annular collar section (5.2), in which the thrust washer element (6) is pushed onto a first pin section (4.1) directly adjoining the pin head (4') and the joint bushing (5) is introduced with the bushing section (5.1) into a first opening (2.1) of the first component (2), in which, in order to produce the joint arrangement (1), subsequently the joint pin (4) having the pre-installed thrust washer element (6) is introduced with a second pin section (4.2) adjoining the first pin section (5.1) into the bushing section (5.1) of the joint bushing (5) and the joint bushing (5) is then captively secured to the joint pin (4).

14. Method according to claim 13, **characterized in that** the thrust washer element (6), after having been pushed onto the first pin section (4.1), is captively secured to the joint pin (4) and/or **in that** the joint pin (4) is axially beared by means of the thrust washer element (6) between the pin head (4') and the topside (2') of the first component (2).

15. Method according to any one of claims 13 to 14, **characterized in that** the bushing section (5.1) of the joint bushing (5) configured as a collar bearing is introduced into the first opening (2.1) of the first component (2) in a manner secured against rotation and/or that the joint bushing (5) is made of a thin-walled material, preferably plastic or metal, and the thrust washer element (6) is made of plastic.

16. Method according to any one of claims 13 to 15, **characterized in that** for captively securing the thrust washer element (6) received by the first pin section (4.1) to the joint pin (4), the material of the joint pin (4) is plastically deformed in the stepped area of the joint pin (4) between the first and second pin sections (4.1, 4.2) and/or that for captively securing the joint bushing (5) received by the second pin section (4.2), the material of the joint pin (4) is plastically deformed in the stepped area of the joint pin (4) between the second and third pin sections (4.2, 4.3).

## Revendications

1. Dispositif articulé entre au moins un premier et un deuxième élément structurel (2, 3), de préférence un élément structurel métallique en forme de tôle, comportant chacun une face supérieure et une face inférieure (2', 3', 2", 3"), comprenant un manchon d'articulation (5) réceptionné dans un premier orifice (2.1) du premier élément structurel (2) et un boulon d'articulation (4) passé à travers le manchon d'articulation et pourvu d'une tête de boulon (4'), le tronçon de boulon (4.3) opposé à la tête de boulon (4') et saillant hors du manchon d'articulation (5) étant susceptible d'être fixé sur le deuxième élément structurel (3), de préférence au moyen d'un assemblage par rivetage, dans lequel entre la tête de boulon (4') et la face supérieure (2') du premier élément structurel (2) est réceptionné un élément à rondelle de butée (6), dans lequel le manchon d'articulation (5) est conçu sous la forme d'un palier à collet, pourvu d'un tronçon de manchon (5.1) réceptionné dans le premier orifice (2.1) et d'un tronçon en collet (5.2) de forme annulaire qui s'y raccorde, le tronçon en collet (5.2) de forme annulaire s'appuyant sur la face inférieure (2") du premier élément structurel (2), **caractérisé en ce que** l'élément à rondelle de butée (6) et/ou le manchon d'articulation (5) conçu sous la forme d'un palier à collet sont maintenus de manière imperdable sur le boulon d'articulation (4).

2. Dispositif d'articulation selon la revendication 1, **caractérisé en ce que** le boulon d'articulation (4) comporte au moins un premier à troisième tronçons de boulon (4.1 à 4.3), qui se raccordent les uns derrières les autres sur la tête de boulon (4') le long de l'axe longitudinal du boulon (BLA) et qui comportent différents diamètres (d1 à d3), de sorte à donner naissance à un boulon d'articulation (4) avec un bord à trajet plusieurs fois échelonné.

3. Dispositif d'articulation selon la revendication 1 ou 2, **caractérisé en ce que** l'élément à rondelle de butée (6) s'appuie directement sur la tête de boulon (4') et sur la face supérieure (2') du premier élément structurel (2).

4. Dispositif d'articulation selon l'une quelconque des revendications 1 à 3, **caractérisé en ce que** le boulon d'articulation (4) comporte au moins un premier tronçon de boulon (4.1), pourvu d'un premier diamètre (d1) et d'une première largeur (b1), un deuxième tronçon de boulon (4.2), pourvu d'un deuxième diamètre (d2) et d'une deuxième largeur (b2) et un troisième tronçon de boulon (4.3), pourvu d'un troisième diamètre (d3) et d'une troisième largeur (b3), les premier à troisième diamètres (d1 à d3) et/ou les première à troisième largeurs (b1 à b3) étant sélectionné(e)s chacun(e) à une valeur différente, le premier diamètre (d1) étant supérieur au deuxième diamètre (d2) et le deuxième diamètre (d2) étant supérieur au troisième diamètre (d2).

5. Dispositif d'articulation selon l'une quelconque des revendications précédentes, **caractérisé en ce que** le tronçon de manchon (5.1) du manchon d'articulation (5) conçu sous la forme d'un palier à collet est réceptionné de manière solidaire en rotation dans le premier orifice (2.1) de l'élément structurel (2) et/ou **en ce que** le tronçon de manchon (5.1) du manchon d'articulation (5) conçu sous la forme d'un palier à collet comporte une cannelure sur sa face extérieure.

6. Dispositif d'articulation selon l'une quelconque des revendications précédentes, **caractérisé en ce que** l'élément à rondelle de butée (6) est bloqué de manière imperdable sur le premier tronçon de boulon (4.1) et/ou le manchon d'articulation (5) est maintenu de manière imperdable sur le deuxième tronçon de boulon (4.2) et/ou **en ce que** le tronçon en collet (5.2) de forme annulaire est réceptionné entre la face inférieure (2") du premier élément structurel (2) et la face supérieure (3') du deuxième élément structurel (3).

7. Dispositif d'articulation selon la revendication 6, **caractérisé en ce que** l'élément à rondelle de butée (6) réceptionné par le premier tronçon de boulon (4.1) est maintenu sur le boulon d'articulation (4) par une déformation plastique infime de la matière du boulon d'articulation (4) dans la région de l'échelon entre les premier et deuxième tronçons de boulon (4.1, 4.2).

8. Dispositif d'articulation selon l'une quelconque des revendications précédentes 2 à 7, **caractérisé en ce que** dans la région échelonnée entre les deuxième et troisième tronçons de boulon (4.2, 4.3), le boulon d'articulation (4) comporte une saillie (4.21) de forme annulaire s'étendant autour de l'axe longitudinal du boulon (BLA) qui entoure une rainure (4.22) de forme annulaire.

9. Dispositif d'articulation selon la revendication 7 et 8, **caractérisé en ce que**, le manchon d'articulation (5) réceptionné dans la région du deuxième tronçon de boulon (4.2) est maintenu de manière imperdable sur le deuxième tronçon de boulon (4.2) par déformation plastique de la saillie (4.21) de forme annulaire du deuxième tronçon de boulon (4.2) vers l'extérieur, c'est-à-dire en direction radiale par rapport à l'axe longitudinal du boulon (BLA).

10. Dispositif d'articulation selon l'une quelconque des revendications précédentes, **caractérisé en ce que** l'élément à rondelle de butée (6) est fabriqué en une matière plastique et/ou **en ce que** le manchon d'articulation (5) est fabriqué en une matière à paroi mince, est fabriqué de préférence en une matière plastique ou un métal, notamment en acier ou en bronze et/ou **en ce que** l'élément à rondelle de butée (6) est conçu pour le logement axial plat du boulon d'articulation (4) par rapport au premier élément structurel (2) et/ou **en ce que** l'élément à rondelle de butée (6) comporte un orifice (6.1) central, qui est conçu pour réceptionner le premier tronçon de boulon (4.1).

11. Dispositif d'articulation selon l'une quelconque des revendications précédentes 2 à 10, **caractérisé en ce que** le troisième tronçon de boulon (4.3) saillant hors du manchon d'articulation (5) est fixé au moyen d'un assemblage par rivetage sur le deuxième élément structurel (3).

12. Ensemble préfabriqué d'un dispositif d'articulation (1) selon l'une quelconque des revendications précédentes, comprenant au moins un premier élément structurel (2), de préférence, un élément structurel métallique en forme de tôle comportant une face supérieure et une face inférieure (2', 2"), un manchon d'articulation (5) réceptionné dans un premier orifice (2.1) du premier élément structurel (2) et un boulon d'articulation (4) pourvu d'une tête de boulon (4'), passé à travers le manchon d'articulation (5), dans lequel entre la tête de boulon (4') et la face supérieure (2') du premier élément structurel (2) est réceptionné un élément à rondelle de butée (6) et dans lequel le manchon d'articulation (5) est conçu sous la forme d'un palier à collet pourvu d'un tronçon de manchon (5.1) réceptionné dans le premier orifice (2.1) et d'un tronçon en collet (5.2) de forme annulaire, se raccordant sur celui-ci, le tronçon en collet (5.2) de forme annulaire s'appuyant sur la face inférieure (2") du premier élément structurel (2), **caractérisé en ce que** l'élément à rondelle de butée (6) et/ou le manchon d'articulation (5) conçu sous la forme d'un palier à collet sont maintenus de manière imperdable sur le boulon d'articulation (4).

13. Procédé, destiné à créer un ensemble préfabriqué d'un dispositif d'articulation (1) entre au moins un premier et un deuxième élément structurel (2, 3), de préférence un élément structurel métallique en forme de tôle, comportant chacun une face supérieure et une face inférieure (2', 3', 2", 3"), sur duquel le dispositif d'articulation (1) comporte au moins un boulon d'articulation (4) pourvu d'une tête de boulon (4') et de plusieurs tronçons de boulon (4.1, 4.2, 4.3) placés les uns derrière les autres le long de l'axe longitudinal du boulon (BLA), un manchon d'articulation (5) et un élément à rondelle de butée (6), le manchon d'articulation (5) étant conçu sous la forme d'un palier à collet, pourvu d'un tronçon de manchon (5.1) et d'un tronçon en collet (5.2) de forme annulaire qui s'y raccorde, lors duquel on emboîte sur un premier tronçon de boulon (4.1) se raccordant directement sur la tête de boulon (4') l'élément à rondelle de butée (6) et on introduit dans un premier orifice (2.1) du premier élément structurel (2) le manchon d'articulation (5) par le tronçon de manchon (5.1), lors duquel pour créer le dispositif d'articulation (1), on introduit ensuite le boulon d'articulation (4) comportant l'élément à rondelle de butée (6) précédemment monté par un deuxième tronçon de boulon (4.2) se raccordant sur le premier tronçon de boulon (4.1) dans le tronçon de manchon (5.1) du manchon d'articulation (5) et on maintient ensuite de manière imperdable le manchon d'articulation (5) sur le boulon d'articulation (4).

14. Procédé selon la revendication 13, **caractérisé en ce qu'**après l'avoir emboîté sur le premier tronçon de boulon (4.1), on maintient de manière imperdable l'élément à rondelle de butée (6) sur le boulon d'articulation (4) et/ou **en ce qu'**on loge en direction axiale le boulon d'articulation (4) au moyen de l'élément à rondelle de butée (6) entre la tête de boulon (4') et la face supérieure (2') du premier élément structurel (2).

15. Procédé selon l'une quelconque des revendications 13 à 14, **caractérisé en ce qu'**on introduit de manière solidaire en rotation le tronçon de manchon (5.1) du manchon d'articulation (5) conçu sous la forme d'un palier à collet dans le premier orifice (2.1) du premier élément structurel (2) et/ou **en ce qu'**on fabrique le manchon d'articulation (5) en une matière à paroi mince, de préférence en une matière plastique ou en un métal et **en ce qu'**on fabrique l'élément à rondelle de butée (6) en une matière plastique.

16. Procédé selon l'une quelconque des revendications 13 à 15, **caractérisé en ce que** pour maintenir de manière imperdable l'élément à rondelle de butée (6) réceptionné par le premier tronçon de boulon (4.1) sur le boulon d'articulation (4), on soumet à une déformation plastique la matière du boulon d'articulation (4) entre la région du boulon d'articulation (4) conçue de forme échelonnée entre le premier et le deuxième tronçon de boulon (4.1, 4.2) et/ou **en ce que** pour maintenir de manière imperdable le manchon d'articulation (5) réceptionné par le deuxième tronçon de boulon (4.2), on soumet à une déformation plastique la matière du boulon d'articulation (4) entre la région du boulon d'articulation (4) conçue de forme échelonnée entre le deuxième et le troisième tronçon de boulon (4.2, 4.3).
